# EUROPÄISCHE PATENTSCHRIFT

(11) **EP 0 542 097 B1**
(45) Veröffentlichungstag und Bekanntmachung des Hinweises auf die Patenterteilung: **17.01.1996**
(21) Anmeldenummer: 92118794.4
(22) Anmeldetag: 03.11.1992
(51) Int. Cl.: B65G 47/26, B65G 13/06, B65G 13/075, B65G 13/07

(54) **Staurollenförderer**
Accumulating roller conveyor
Convoyeur-accumulateur à rouleaux

(30) Priorität: 11.11.1991 DE 9113989 U
(43) Veröffentlichungstag der Anmeldung: 19.05.1993
(73) Patentinhaber: PSB GMBH FÖRDERANLAGEN UND LAGERTECHNIK, D-66955 Pirmasens (DE)
(72) Erfinder: Konrath, Ludwig, W-6785 Münchweiler (DE); Schäfer, Herbert, W-6788 Vinningen (DE); Thumm, Roland, W-6740 Landau 14 (DE)
(74) Vertreter: Patentanwälte Dipl.-Ing. F.W. Möll Dipl.-Ing. H.Ch. Bitterich

(56) Entgegenhaltungen:
- AT-B- 384 595
- DE-C- 3 817 388
- DE-U- 9 113 989
- FR-A- 2 537 104

## Beschreibung

Die Erfindung betrifft Staurollenförderer mit wenigstens einem Stauplatz gemäß dem Oberbegriff des Anspruchs 1.

Ein derartiger Staurollenförderer ist bekannt aus DE-C-38 17 388. Dieser Staurollenförderer verwendet zum Antreiben der Tragrollen einen kontinuierlich umlaufenden Antriebsgurt. Zum Bremsen der Rollen wird ein fixierter Bremsgurt eingesetzt. Um Antriebsgurt und Bremsgurt abwechselnd heben und senken zu können, laufen diese über Antriebsgurtrollen bzw. Bremsgurtrollen, die ihrerseits exzentrisch auf einer Steuerrolle gelagert sind. Alle Steuerrollen eines Stauplatzes sind über ein sogenanntes Schaltlineal mit einander verbunden, welches von einem Stellgerät, beispielsweise einem Pneumatikzylinder, betätigt wird. Die Umschaltung zwischen Antreiben und Bremsen wird gesteuert über als zweiarmige Hebel ausgebildete Schaltleisten, die von den Fördergütern verschwenkt werden und dabei einen Pneumatikschalter betätigen. Die Auswertung und Weiterverarbeitung erfolgt über eine Logikschaltung.

Nachteilig ist bei dieser Konstruktion die gegenseitig versetzte exzentrische Lagerung der Antriebsgurtrollen und der Bremsgurtrollen in speziellen Steuerrollen, die mittels des Schaltlineals um beispielsweise 135 Grad verdreht werden. Die richtige Positionierung und das synchrone Verdrehen aller Steuerrollen eines Stauplatzes setzt eine exakte und langwierige werksseitige Justage voraus.

Ein weiterer Staurollenförderer ist bekannt aus AT-B-384595. Die den Antriebsgurt tragenden Antriebsgurtrollen eines Stauplatzes sind in einer Schiene gehalten, unter der Antriebsschrägen montiert sind. Diese wirken mit am Tragprofil fest montierten Antriebskulissen zusammen. Wird die Schiene mit Hilfe eines Pneumatikzylinders seitlich verschoben, wird sie dank Kulisse und Antriebsschräge angehoben bzw. abgesenkt. Im angehobenen Zustand liegt der Antriebsgurt an den Tragrollen an. Im abgesenkten Zustand der Schiene läuft der Antriebsgurt frei unter den Tragrollen; gleichzeitig werden an der Schiene befestigte Bremsprofile an jede Tragrolle angepreßt. Dadurch werden die Tragrollen und das darauf stehende Fördergut abgebremst, wodurch der gewünschte Stauvorgang bewirkt wird.

Nachteilig ist bei dieser Konstruktion nicht nur die relativ große Bauhöhe sondern auch die korrekte, langwierige Justage der Tragrollen, damit alle Bremsprofile gleichmäßig bremsen, und das trotzdem geringe Bremsmoment. In der Praxis prallen immer wieder schwere Fördergüter auf bereits im Stau stehende Fördergüter auf und es kommt zu Betriebsstörungen und/oder zu Beschädigungen.

Ein weiterer Staurollenförderer ist bekannt aus FR-A-25 37 104. Bei diesem sind die Antriebsgurtrollen auf Achsen gelagert, die ihrerseits in den Seitenschenkeln zweier ineinandergesteckter U-Schienen gelagert sind. Die U-Schienen sind zu diesem Zweck mit Langlöchern ausgerüstet, wobei die Langlöcher der äußeren U-Schiene schräg, die Langlöcher der inneren U-Schiene senkrecht gerichtet sind. Ein Zylinder verschiebt die innere U-Schiene gegen die äußere U-Schiene, wodurch die Achsen der Antriebsgurtrollen in den Langlöchern auf- und abgleiten, wodurch der endlos umlaufende Antriebsgurt gegen die Tragrollen angepreßt wird oder nicht. An der beweglichen U-Schiene ist zusätzlich je Stauplatz ein einziges Bremsprofil vorgesehen, welches eine der Tragrollen pro Stauplatz abbremst.

Da bei dieser Konstruktion nur ein Bremsprofil je Stauplatz vorgesehen ist, ist die Justage zwar einfach, das Bremsmoment ist jedoch sehr gering. Betriebsstörungen und Beschädigungen sind unvermeidlich. Die Führung der Achsen für die Antriebsrollen in zwei sich schneidenden Langlöchern hat hohe Reibungskräfte, hohe Betätigungskräfte und vor allem hohen Verschleiß zur Folge.

Von diesem Stand der Technik ausgehend liegt der vorliegenden Erfindung die Aufgabe zugrunde, den gattungsgemäßen Staurollenförderer konstruktiv zu vereinfachen, seine Bauhöhe zu verringern und eine Montage ohne langwierige Justage zu ermöglichen, ohne daß die Betriebssicherheit darunter leidet.

Diese Aufgabe wird gelöst durch einen Staurollenförderer mit den Merkmalen des Anspruchs 1.

Bei der vorliegenden Erfindung sind die Antriebsgurtrollen bzw. die Bremsgurtrollen eines Stauplatzes in Schienen gelagert. Werden diese abwechselnd gleichzeitig angehoben bzw. abgesenkt, so werden alle Tragrollen eines Stauplatzes entweder gleichzeitig angetrieben oder gleichzeitig abgebremst. Dadurch können leichte und schwere Fördergüter gleich gut angetrieben und abgebremst werden. Die gewünschte geringe Bauhöhe ergibt sich dadurch, daß die mit den Kulissen zusammenwirkenden Schrägen in der Verlängerung der Schienen angebracht sind.

Das gewünschte zwangsläufige abwechselnde Heben und Senken der beiden Schienen wird dadurch erreicht, daß entweder die Antriebskulissen und die Bremskulissen einander entgegengesetzte Schrägen oder Antriebssteller und Bremssteller einander entgegengesetzte Wirkrichtungen besitzen.

Als Schienen finden vorzugsweise U-Schienen Verwendung.

Zum Stützen des Bremsgurtes können ebenfalls Rollen verwendet werden. Da der Bremsgurt selbst jedoch nicht umläuft, genügen starre Bremsgurtstützen ebenso.

Es empfiehlt sich, jede Antriebs- bzw. Bremsgurtrolle zwischen zwei Tragrollen zu Positionieren. Auf diese Weise werden die Antriebs- bzw. Bremskräfte gleichzeitig auf zwei Tragrollen übertragen und Fertigungstoleranzen in den Tragrollen und Rollenlagerungen ausgeglichen.

Als Antriebs- und Bremssteller können Elektromotoren, Elektromagnete und insbesondere Pneumatikzylinder eingesetzt werden. Das Schaltelement, welches von der Schaltleiste betätigt wird, wird dementsprechend als Elektro- oder Pneumatikschalter ausgelegt.

Anhand der Zeichnung soll die Erfindung in Form eines Ausführungsbeispieles näher erläutert werden. Es zeigen
- Fig. 1: eine Staurollenbahn im Längsschnitt entlang der Linie I-I in Fig. 3,
- Fig. 2: die Staurollenbahn im Längsschnitt entlang der Linie II-II in Fig. 3,
- Fig. 3: einen Querschnitt durch die Staurollenbahn der Fig. 1 und 2 und
- Fig. 4: einen Teilquerschnitt durch die Staurollenbahn entlang der Linie IV-IV in Fig. 3.

Der dargestellte Staurollenförderer wird gebildet durch zwei parallele Tragprofile 1, zwischen denen in regelmäßigen Abständen Tragrollen 2 leicht drehbar montiert sind. Die Tragprofile 1 werden durch Querstreben 22 auf Abstand gehalten.

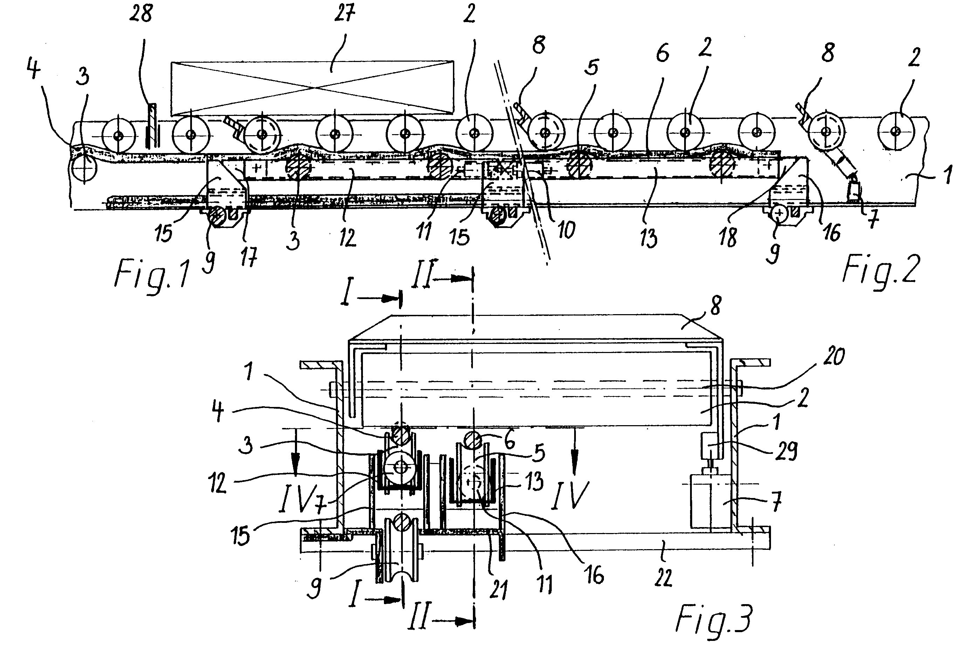

Unterhalb der Tragrollen 2 verläuft ein endlos umlaufender Antriebsgurt 4, dessen Obertrum von Antriebsgurtrollen 3 und dessen Untertrum von Gurttragrollen 9 geführt wird. Die Antriebsgurtrollen 3 sind heb- und senkbar. Im angehobenen Zustand treibt der Antriebsgurt 4 jeweils zwei benachbarte Tragrollen 2 an. Dieser Zustand ist in den Fig. 1 und 3 dargestellt.

Wie insbesondere die Fig. 2 und 3 erkennen lassen, ist neben dem Antriebsgurt 4 ein an Anfang und Ende fixierter Bremsgurt 6 vorgesehen. Auch dieser ist heb-und senkbar mit Hilfe von Bremsgurt rollen 5. Im angehobenen Zustand legt sich der Bremsgurt 6 an zwei benachbarte Tragrollen 2 an und setzt diese still. Dieser Zustand ist in Fig. 2 dargestellt.

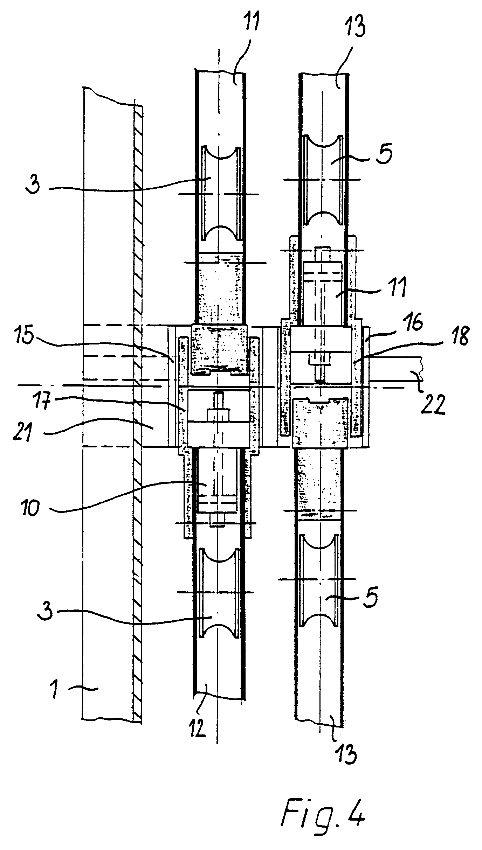

Die Antriebsgurtrollen 3 bzw. Bremsgurtrollen 5 sind in je einer U-Schiene 12, 13 gelagert. Zum Heben und Senken der U-Schienen 12, 13 bzw. der Antriebs- bzw. Bremsgurtrollen 3, 5 sind je Stauplatz zwei Antriebskulissen 15 bzw. Bremskulissen 16 an den Tragprofilen 1 montiert. An den Enden der U-Schienen 12, 13 und als Verlängerung derselben sind Antriebsschrägen 17 bzw. Bremsschrägen 18 montiert, die mit den Kulissen 15, 16 zusammenwirken. Das Verschieben der U-Schienen 12, 13 erfolgt mittels eines Antriebsstellers 10 bzw. Bremsstellers 11 in Form von Pneumatikzylindern. Diese sind ebenso wie die Kulissen 15, 16 an einer Konsolleiste 21 montiert, was insbesondere in Fig. 4 gut zu erkennen ist.

Fig. 3 zeigt eine Schaltleiste 8, die als doppelarmiger Hebel ausgebildet und auf der Achse 20 einer Tragrolle 2 gelagert ist. Ein Gegengewicht 29 sorgt dafür, daß die Schaltleiste 8 aufgrund der Schwerkraft in die Laufbahn der Fördergüter 27 ragt. Wird die Schaltleiste 8 durch ein Fördergut 27 verschwenkt, betätigt sie einen Pneumatikschalter 7, der über eine (nicht dargestellte) Logikschaltung die Pneumatikzylinder 10, 11 aktiviert.

Wie Fig. 1 noch erkennen läßt, befindet sich am Anfang jedes Stauplatzes ein heb- und senkbarer mechanischer Anschlag 28, der das ankommende Fördergut 27 anhält. Die unter dem Gewicht des Förderguts 27 verschwenkte Schaltleiste 8 aktiviert die Logikschaltung so, daß die Tragrollen 2, auf denen das Fördergut 27 gerade steht, gebremst werden. Außerdem wird die Logikschaltung des vorangehenden Stauplatzes so vorbereitet, daß dessen Staurollen ebenfalls abgebremst werden, sobald die diesem Stauplatz zugeordnete Schaltleiste 8 durch ein auflaufendes Fördergut verschwenkt wird. Diese Bildung eines Staus und das Auflösen desselben ist eine bekannte Technik, die mit Hilfe der erfindungsgemäßen einfachen und preiswerten Konstruktion mit großer Betriebssicherheit abläuft.

## Patentansprüche

1. Staurollenförderer mit wenigstens einem Stauplatz, ausgerüstet mit parallelen Tragprofilen (1), zwischen denen Tragrollen (2) montiert sind, mit einem über Antriebsgurtrollen (3) geführten, heb- und senkbaren, endlosen Antriebsgurt (4) mit einem Antriebssteller (10) je Stauplatz zum Heben und Senken der Antriebsgurtrollen (3) bzw. des Antriebsgurts (4), mit einem an Anfang und Ende fixierten Bremsgurt (6), der über Bremsgurtstützen (5) geführt ist, wobei Antriebsgurtrollen (3) und Bremsgurtstützen (5) eines Stauplatzes abwechselnd heb- und senkbar sind, mit einer durch das Gewicht des Förderguts (27) verschwenkbaren Schalt leiste (8) und einem dadurch betätigbaren Schaltelement (7) je Stauplatz sowie mit einer Logikschaltung, die die Steller (10) in Abhängigkeit von der Stellung der Schaltelemente (7) in den aufeinanderfolgenden Stauplätzen aktiviert, dadurch gekennzeichnet, daß die Antriebsgurtrollen (3) je Stauplatz in einer ersten Schiene (12) gehalten sind, wobei der Antriebssteller (10) an dieser Schiene (12) angreift, daß die Bremsgurtstützen (5) in einer zweiten Schiene (13) gehalten sind, daß an den Tragprofilen (1) sowohl Antriebskulissen (15) und damit zusammenwirkende Antriebsschrägen (17) an der ersten Schiene (12) als auch Bremskulissen (16) und damit zusammenwirkende Bremsschrägen (18) an der zweiten Schiene (13) vorgesehen sind, daß zum Verschieben und gleichzeitigen Heben und Senken der zweiten Schiene (13) bzw. des Bremsgurts (6) ein Bremssteller (11) vorgesehen ist, daß Antriebskulissen (15) und Bremskulissen (16) einander entgegengesetzte Schrägen und/oder Antriebssteller (10) und Bremssteller (11) einander entgegengesetzte Wirkrichtungen besitzen und daß die Antriebs- bzw. Bremsschrägen (17, 18) als Verlängerung ihrer Schiene (12, 13) montiert sind.

2. Staurollenförderer nach Anspruch 1, dadurch gekennzeichnet, daß die Bremsgurtstützen (5) als Bremsgurtrollen ausgebildet sind.

3. Staurollenförderer nach Anspruch 1 oder 2, dadurch gekennzeichnet, daß Antriebssteller (10) und Bremssteller (11) Pneumatikzylinder sind.

4. Stauroltenförderer nach Anspruch 1, 2 oder 3, dadurch gekennzeichnet, daß das Schaltelement (7) ein Pneumatikschalter ist.

5. Staurollenförderer nach einem der Ansprüche 1 bis 4, dadurch gekennzeichnet, daß jede Antriebsgurtrolle (3) und jede Bremsgurtstütze bzw. -rolle (5) zwischen zwei Tragrollen (2) positioniert ist.

6. Staurollenförderer nach einem der Ansprüche 1 bis 5, dadurch gekennzeichnet, daß die Schienen (12, 13) U-Schienen sind.

## Claims

1. An accumulator-type roller conveyor with at least one accumulating station, provided with parallel support profiles (1) between which are installed carrier rollers (2), with a raisable and lowerable endless drive belt (4), guided over drive belt rollers (3) with a drive actuating element (10) per accumulating station for raising and lowering the drive belt rollers (3) and/or the drive belt (4), with a brake belt (6) which is secured to the start and end and which is guided over brake belt supports (5), wherein the drive belt rollers (3) and brake belt supports (5) of one accumulating station are alternately raisable and lowerable, with a switching bar (8) which is pivotable by the weight of the goods being conveyed and with one switching element (7), which can be actuated thereby, per accumulating station and also with a logic circuit which activates the actuating elements (10) as a function of the position of the switching elements (7) in the successive accumulating stations, characterised in that the drive belt rollers (3) of each accumulating station are mounted in a first rail (12), wherein the drive actuating element (10) engages on this rail (12), in that the brake belt supports (5) are mounted in a second rail (13), in that on the support profiles (1) not only drive links (15) and drive bevels (17) co-operating therewith are provided on the first rail (12) but also brake links (16) and brake bevels (18) co-operating therewith are provided on the second rail (13), in that a brake actuating element (11) is provided for displacing and simultaneously raising and lowering the second rail (13) and/or the brake belt (6), in that the drive links (15) and the brake links (16) have mutually opposite bevels and/or the drive actuating elements (10) and the brake actuating elements (11) have mutually opposite operating directions, and in that the drive and brake bevels (17, 18) are arranged as an extension of their respective rail (12, 13).

2. An accumulator-type roller conveyor according to Claim 1, characterised in that the brake belt supports (5) are in the form of brake belt rollers.

3. An accumulator-type roller conveyor according to Claim 1 or 2, characterised in that the drive actuating elements (10) and the brake actuating element (11) are pneumatic cylinders.

4. An accumulator-type roller conveyor according to Claim 1, 2 or 3, characterised in that the switching element (7) is a pneumatic switch.

5. An accumulator-type roller conveyor according to any one of Claims 1 to 4, characterized in that each drive belt roller (3) and each brake belt support or roller (5) is positioned between two carrier rollers (2).

6. An accumulator-type roller conveyor according to any one of Claims 1 to 5, characterized in that the rails (12, 13) are U-rails.

## Revendications

1. Convoyeur-accumulateur à rouleaux, avec au moins un emplacement d'accumulation, équipé avec des profilés supports (12) parallèles entre lesquels sont montés des rouleaux supports (2), avec une courroie d'entraînement (4) continue, susceptible d'être levée et abaissée, guidée sur des rouleaux à courroie d'entraînement (3), avec un régleur d'entraînement (10) pour chaque emplacement d'accumulation, pour lever et abaisser les rouleaux à courroie d'entraînement (3), respectivement la courroie d'entraînement (4), avec une courroie de freinage (6) fixée au début et à la fin et guidée sur des appuis à courroie de freinage (5), les rouleaux à courroie d'entraînement (3) et les appuis à courroie de freinage (5) d'un emplacement d'accumulation étant susceptibles d'être alternativement levés et abaissés, avec une bande de commutation (8) susceptible de pivoter sous l'effet du poids du produit transporté (27) et un élément de commutation (7) actionnable de ce fait pour chaque emplacement d'accumulation ainsi qu'avec un circuit logique qui active les régleurs (10) en fonction de la position des éléments de commutation (7) dans les emplacements d'accumulation successifs, caractérisé en ce que les rouleaux à courroie d'entraînement (3) sont maintenus, pour chaque emplacement d'accumulation, dans une première glissière (12), le régleur d'entraînement (10) agissant sur cette glissière (12), en ce que les appuis à courroie de freinage (5) sont maintenus dans une deuxième glissière (13), en ce que sur les profilés supports (1) sont prévus tant des coulisses d'entraînement (15) et des pentes d'entraînement (17) coopérant avec elles sur la première glissière (12) que, également, des coulisses de freinage (16) et des pentes de freinage (18) coopérant avec elles sur la deuxième glissière (13), en ce que pour effectuer le déplacement et le levage et l'abaissement simultanés de la deuxième glissière (13) respectivement de la courroie de freinage (6) est prévu un régleur de freinage (11) en ce que les coulisses d'entraînement (15) et les coulisses de freinage (16) ont des pentes opposées les unes aux autres et/ou des régleurs d'entraînement (10) et des régleurs de freinage (11), appartenant à des dispositifs fonctionnels agissant les uns à l'encontre des autres, et en ce que les pentes d'entraînement, respectivement de freinage (17, 18) sont montées à titre de prolongement de leur glissière (12, 13).

2. Convoyeur-accumulateur à rouleaux selon la revendication 1, caractérisé en ce que les appuis à courroie de freinage (5) sont réalisés sous forme de rouleaux à courroie de freinage.

3. Convoyeur accumulateur à rouleaux selon la revendication 1 ou 2, caractérisé en ce que les régleurs d'entraînement (10) et les régleurs de freinage (11) sont des vérins pneumatiques.

4. Convoyeur-accumulateur à rouleaux selon la revendication 1, 2 ou 3, caractérisé en ce que l'élément de commutation (7) est un interrupteur pneumatique.

5. Convoyeur-accumulateur à rouleaux selon l'une des revendications 1 à 4, caractérisé en ce que chaque rouleau à courroie d'entraînement (3) et chaque appui ou rouleau à courroie de freinage (5) est positionné entre deux rouleaux supports (2).

6. Convoyeur-accumulateur à rouleaux selon l'une des revendications 1 à 5, caractérisé en ce que les glissières (12, 13) sont des glissières en U.
